# NEUE EUROPÄISCHE PATENTSCHRIFT

(11) **EP 0 953 489 B2**
(45) Veröffentlichungstag und Bekanntmachung des Hinweises auf die Entscheidung über den Einspruch: **21.11.2007**
(45) Hinweis auf die Patenterteilung: 18.06.2003
(21) Anmeldenummer: 99105740.7
(22) Anmeldetag: 22.03.1999
(51) Int. Cl.: B60T 10/02

(54) **Am Retarder angeordnete Steuereinheit und/oder Eigenschaftsspeicher**
Control unit and / or computer memory for a retarder
Unité de commande et / ou banc de mémoire pour un ralentisseur

(30) Priorität: 25.03.1998 DE 19813015
(43) Veröffentlichungstag der Anmeldung: 03.11.1999
(73) Patentinhaber: Voith Turbo GmbH & Co. KG, 89522 Heidenheim (DE)
(72) Erfinder: Friedrich, Jürgen, 74564 Crailsheim (DE); Rose, Peter, 89522 Heidenheim (DE)
(74) Vertreter: Dr. Weitzel & Partner

(56) Entgegenhaltungen:
- EP-A- 0 291 887
- EP-B1- 0 932 778
- WO-A-94/27845
- DE-A- 4 208 782
- DE-C2- 4 302 248
- US-A- 4 485 444
- US-A- 5 507 361

## Beschreibung

Die Erfindung betrifft eine Vorrichtung zur elektronischen Steuerung eines Retarders mit einer ersten elektronischen Steuereinheit für das Fahrzeugmanagement, die in einer vorbestimmten Position im Fahrzeug entfernt vom Retarder angeordnet ist und eine zweite elektronische Steuereinheit und/oder einen Eigenschaftsspeicher aufweist.

Die Ansteuerung und Bedienung eines Retarders erfolgte bislang meist mit einer eigens hierfür geschaffenen Retardersteuerung, wie sie beispielsweise aus der DE 43 41 213 oder der EP 0 291 887 bekanntgeworden ist. Derartige Retardersteuerungen waren in der Regel im Führerraum eines Fahrzeuges in der Nähe des Bedienelementes für den Retarder, wie beispielsweise im Falle der DE 43 41 213, untergebracht.

Neben derartigen Steuerungen sind auch Retardersteuerungen bekanntgeworden, die in das Fahrzeugmanagementsystem integriert wurden, wie beispielsweise in der WO94/27845 beschrieben.

Nachteilig an den bekannten Retardersteuereinrichtungen war, daß für einen Retarder gleichen Typs die Steuerungen stets identisch eingestellt waren, um beispielsweise leichte Tauschbarkeit zu gewährleisten, d. h. die bekannten hydrodynamischen Toleranzen konnten nicht ausgeschlossen werden. Solche Retardersteuereinrichtungen waren somit nicht auf den individuell im Fahrzeug eingebauten Retarder abgeglichen.

Wurde andererseits die Retardersteuereinrichtung auf einen Retarder abgeglichen, so mußte beim Retardertausch die Steuerung, beispielsweise die ECU, entsprechend umprogrammiert werden. Dies war sehr arbeitsintensiv. Das Dokument DE 43 02 248 C2 beschreibt eine Vorrichtung zur elektronischen Steuerung eines Kraftfahrzeug-Automakkgetriebes mit einer zentralen elektronischen Steuereinheit und einen am Getriebegehäuse angeordneten Eigenschaftsspeicher, welcher mit der Steuereinheit über Signalleitungen verbunden ist.

Aufgabe der Erfindung ist es daher, eine elektronische Vorrichtung zur Retardersteuerung anzugeben, die die zuvor aufgezeigten Nachteile vermeidet, die einen einfachen Tausch eines Retarders ermöglicht und bei der die Retardersteuerung auf den einzelnen im Fahrzeug eingebauten Retarder abgestimmt ist

Erfindungsgemäß wird diese Aufgabe dadurch gelöst, daß eine zweite elektronische Steuereinheit und/oder ein Eigenschaftsspeicher für den Retarder vorgesehen ist und diese zweite elektronische Steuereinheit und/oder der Eigenschaftsspeicher direkt am Retardergehäuse angeordnet und über zumindest eine Signalleitung elektrisch mit der ersten elektronischen Steuereinheit für das Fahrzeugmanagement verbunden ist.

Durch Anordnung der Steuereinheit und/oder des Eigenschaftsspeichers am Retarder ist eine individuelle Abstimmung der Steuereinheit auf den jeweiligen Retarder möglich, ohne daß bei einem Retardertausch eine Umprogrammierung der Steuereinheit vorgenommen werden muß.

In einer fortgebildeten Ausführungsform ist vorgesehen, daß die auf dem Retarder angeordnete elektronische Speichereinheit und/oder der Eigenschaftsspeicher einen Festwertspeicher, beispielsweise ein EEPROM, umfaßt.

Denkbar wäre auch eine Programmierung eines konventionellen Schreibe/Lesespeichers, der durch entsprechende Programmierung bzw. Codierung vor einem unbefugten Schreib-/Lesezugriff geschützt wird. Um eine thermische Überlastung der direkt auf dem Retardergehäuse angeordneten Speichereinheit aufgrund der Wärmeentwicklung im Retarder zu verhindern, ist vorgesehen, daß die elektronische Speichereinheit und/oder der Eigenschaftsspeicher, der am Retarder angeordnet ist, wärmetechnisch von diesem entkoppelt wird, durch eine wärmeisolierende Zwischenschicht.

Alternativ oder zusätzlich ist die Speichereinheit nicht nur wärmetechnisch vom Retarder entkoppelt sondern auch schwingungstechnisch, beispielsweise dadurch, daß die elektronische Speichereinheit und/oder der Eigenschaftsspeicher schwingungsgedämpft elastisch am Retarder aufgehängt ist.

Die Erfindung soll nachfolgend anhand der Figuren beispielhaft beschrieben werden.

Es zeigen:

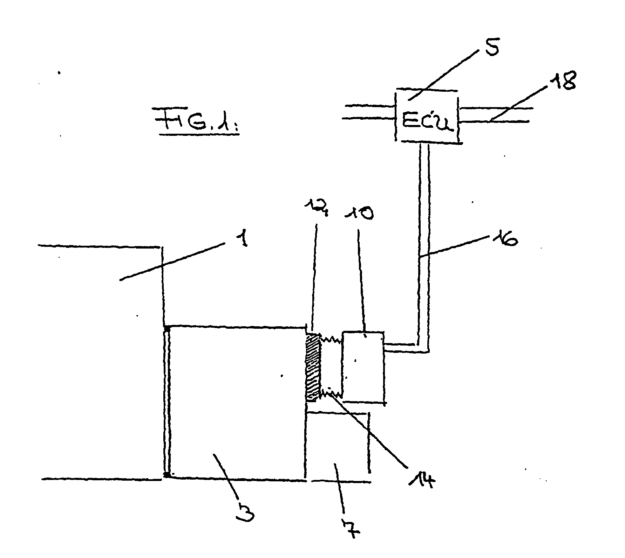

- Fig. 1:: einen Retarder mit der erfindungsgemäßen Steuer- und/oder Eigenschaftsspeichereinheit.

In Fig. 1 ist ein an einem Getriebe 1 sekundärseitig angeordneter Retarder sowie die Steuereinheit für das Fahrzeugmanagement 5, die vorliegend eine ECU ist, gezeigt. Die ECU 5 ist hierbei im Fahrzeug entfernt vom Retarder 3 angeordnet.

Der Retarder 3 kann sämtliche Retarderarten umfassen, beispielsweise einen elektrischen Retarder, wie er aus beispielsweise "Gegen den Strom, Lastauto Omnisbus 4/1991, Seiten 30 - 34" bekanntgeworden ist, handeln oder um einen hydrodynamischen Retarder, wie beispielsweise in Voith, Hydrodynamische Getriebe, Kupplungen, Bremsen, Otto Krausskopf-Verlag, 1970, Seiten 210 - 219 offenbart, wobei der hydrodynamische Retarder sowohl sekundärseitig wie auch primärseitig, wie beispielsweise aus der DE 44 40 164 bekannt.

In dem vorliegenden dargestellten Beispiel handelt es sich um einen Sekundärretarder, der direkt am Getriebe 1 angebaut ist. Der Sekundärretarder weist als Arbeitsmedium üblicherweise Öl auf, wobei die Wärme, die sich während des Bremsvorgangs entwickelt, durch den Wärmetauscher 7, der an der Rückseite des Retarders 3 angeordnet ist, abgeführt wird.

Erfindungsgemäß ist am Retardergehäuse 3 die zweite Steuereinheit 10 bzw. der Eigenschaftsspeicher des Retarders 3 befestigt. Der zweite Speicherbaustein 10 bzw. Eigenschaftsspeicher ist vom Retarder sowohl bezüglich des Wärmeübertrags wie auch des Übertrags von Schwingungen entkoppelt und zwar beispielsweise wie eingezeichnet durch eine wärmeisolierende Schicht 12 zwischen Speichereinheit bzw. Eigenschaftsspeicher 10 und Retarder 3 sowie eine elastische Aufhängung 14 zwischen Speichereinheit 10 bzw. Eigenschaftsspeicher und Retarder 3.

Mit der ECU 5, die Programme für das gesamte Fahrzeugmanagement umfassen kann, ist der Eigenschaftsspeicher bzw. der Speicherbaustein 10 über zwei Signalleitungen 16 elektrisch verbunden. In einer alternativen Ausführungsform kann die zweite Speichereinheit statt direkt mit der ECU 5 auch mit einer Schnittstelle, beispielsweise einem CAN-Bus für das Fahrzeugmanagement verbunden sein. Über die Verbindungsleitung 16 können die entsprechenden Steuersignale von der ECU bzw. Schnittstelle an den Eigenschaftsspeicher bzw. die Retardersteuerung übermittelt werden, ebenso die Eigenschafts- bzw. Zustandssignale von der Retardersteuerung zur ECU 5 bzw. Schnittstelle. An der ECU 5 angedeutet sind weitere Signalleitungen 18 zu anderen Fahrzeugkomponenten, beispielsweise zum Motor oder zu anderen Bremssystemen.

Mit der vorliegenden Erfindung wird somit erstmals eine Anordnung angegeben, mit der auf einfache Art und Weise ein Austausch der Retardersteuerung oder eine Umprogrammierung derselben beim Tausch eines Retarders entfällt.

## Patentansprüche

1. Vorrichtung zur elektronischen Steuerung eines Retarders mit
einer ersten elektronischen Steuereinheit für das Fahrzeugmanagement (5), die in einer vorbestimmten Position im Fahrzeug entfernt vom Retarder (3) angeordnet ist;
**dadurch gekennzeichnet, dass**
eine zweite elektronische Steuereinheit und/oder ein Eigenschaftsspeicher (10) für den Retarder (3) direkt am Gehäuse des Retarders (3) angeordnet ist und
über zumindest eine Signalleitung (16) elektrisch mit der ersten elektronischen Steuereinheit für das Fahrzeugmanagement (5) verbunden ist, wobei
die zweite elektronische Steuereinheit und/oder der Eigenschaftsspeicher (10) am Retarder (3) derart angeordnet ist, dass diese(r) vom Retarder (3) durch eine wärmeisolierende Schicht (12) wärmetechnisch entkoppelt ist und/oder am Retarder (3) über eine elastische Aufhängung (14) schwingungsgedämpft angeordnet ist.

2. Vorrichtung gemäß Anspruch 1, **dadurch gekennzeichnet, dass** die elektronische Steuereinheit und/oder der Eigenschaftsspeicher (10) ein EEPROM umfasst.

## Claims

1. An apparatus for the electronic control of a retarder with a first electronic control unit for the vehicle management (5) which is arranged at a predetermined position in the vehicle at a distance from the retarder (3), **characterized in that** a second electronic control unit and/or a property memory (10) for the retarder (3) is directly arranged on the housing of the retarder (3) and is electrically connected via at least one signal line (16) with the first electronic control unit for the vehicle management (5), with the second electronic memory unit and/or the property memory (10) being arranged on the retarder (3) in such a way that the same is/are uncoupled from the retarder (3) in a thermal respect through a heat-insulating layer (12) and/or arranged on the retarder (3) via an elastic suspension (14) in a vibration-damped fashion.

2. An apparatus as claimed in claim 1, **characterized in that** the electronic memory unit and/or the property memory (10) comprises an EEPROM.

## Revendications

1. Dispositif pour la commande électronique d'un retardateur comprenant une première unité de commande électronique pour la gestion d'un véhicule (5), qui est disposée dans une position prédéterminée dans le véhicule à distance du retardateur, **caractérisé en ce qu'**une deuxième unité de commande électronique et/ou une mémoire de propriétés (10) pour le retardateur sont directement disposées sur le boîtier du retardateur (3) et communiquent électriquement par au moins une ligne de signal (16) avec la première unité de commande électronique pour la gestion du véhicule, la deuxième unité de commande et/ou la mémoire de propriétés (10) étant disposée(s) sur le retardateur (3) de façon à être découplée(s) du retardateur (3) du point de vue thermique par une couche d'isolation thermique (12) et/ou disposée(s) sur le retardateur (3) de façon à amortir les vibrations à l'aide d'une suspension élastique (14).

2. Dispositif selon la revendication 1, **caractérisé en ce que** l'unité de mémoire électronique et/ou la mémoire de propriétés (10) comprend une EEPROM.
